# EUROPEAN PATENT APPLICATION

(11) **EP 2 302 758 A1**
(43) Date of publication of application: **30.03.2011**
(21) Application number: 09425374.7
(22) Date of filing: 24.09.2009
(51) Int. Cl.: H02J 7/00

(54) **System for rapidly recharging batteries**

(71) Applicant: U.B.S. Union Battery Service S.r.l., 25010 Colombare di Sirmione (BS) (IT)
(72) Inventor: Mori, Antonio, 25015 Desenzano del Garda (BS) (IT)
(74) Representative: Bruni, Giovanni

(57) **Abstract**

Method for rapid recharging batteries for light traction, which optimizes the duration in time by means of suitable devices for daily recharge and of suitable techniques for preparing the batteries, the method comprising a selection step of the batteries constituting the respective battery pack, a working step of the same battery pack and a recharging step of the same, **characterized in that** the selection of the batteries is carried out by balancing the same with a specific charging cycle and by selecting the ones behaving most similarly and the rapid recharging of the batteries is carried out by equalizing the voltage of the same and by monitoring each significant event.

## Description

The present invention relates to a modular system, conceived and developed for rapidly recharging used batteries, for example, in the industrial cleaning field. In particular, the present invention introduces a new concept of rapid recharge in the field of batteries for light traction. The possible applications are to be found in the equipments for industrial cleaning, transpallets, golf car, electric traction road vehicles and electric traction industrial vehicles. Moreover, the invention combines the advantages deriving from the usage of sealed modular batteries, which do not need any maintenance and which can be used in the food, medical and rental sector. By means of such a system, 90% of the depleted energy is recovered in one hour of recharge, and therefore the system can be used even more times a day, thus considerably increasing its real autonomy. In order to obtain these results and to exploit the maximum possible life of the used batteries, the system, object of the present invention has to be comprised of the following elements: one or more batteries able to withstand high charging and discharging currents, a high frequency professional battery charger with suitable charging profile, an equalization system for the batteries and a data monitoring system for each charging and recharging cycle. The present invention solves the technical problem by means of the rapid recharging of batteries for light traction. The batteries according to the invention are connected in series and depending on the number of the same batteries, battery packs with 24/36/48/72/84/96V nominal voltage can be obtained. In addition, in order to increase the available capacity, even more battery packs can be connected in parallel. A real theoretical limit in realizing high capacity battery packs does not exist, yet the limits can be the practical ones, as for example costs and power needed to operate the corresponding battery charger. The present invention is especially advantageous in that it meets a wide range of battery needs, both concerning the nominal voltage and the capacity. The unique obligation is that the battery pack has to be made up only of batteries of the same type. Each element of the system, according to the invention, has to meet determined features. The batteries are of pure lead, MGA type, with spiral cell. These structural requirements allow to obtain batteries with very low internal resistance, and this fact results in two aspects, which are very important for the application. The first one is that said batteries withstand high discharging currents. The battery is in fact able to completely convert the electrochemical energy in electric energy, even when discharged by high currents. This means that, in case of equal capacity, these batteries give more autonomy to the vehicle in comparison to the normal MGA batteries. The second one is that they admit high recharging currents as well, and this aspect allows to drastically reduce the recharging time. These batteries are normally available on the market, but, in order to be used in the inventive system, they have to be subjected to a selection treatment, which is made up of two steps, the balancing and the selection one. Therefore, the battery groups are first charged in parallel for at least 24 hours, bringing the voltage to 14,7V and allowing the current to reach the value, each battery needs. Then, the most similarly behaving batteries are selected in order to be introduced in the system. This operation is needed to guarantee that the voltage of every battery behaves as much as possible in a similar manner during its usage. If, in fact, the battery voltages constituting a pack do not remain reasonably equal, a process will be initiated whereby some batteries will tend to reach high values (beyond the limit admitted by the same battery) and others will remain on lower values. This situation leads to rapid destruction of the same batteries. The battery charger is of high frequency type with all the advantages deriving therefrom, as for example greater energetic efficiency, reduced dimensions and weight as well as a considerable functioning stability with respect to the net voltage variation. These and other advantages will be highlighted in the following detailed description, which specifically refers to the illustrative and not limiting drawings 1/1, 1/2 e 1/3, in which:
Figure 1 represents schematically the optimal charging profile according to the invention.
Figure 2 shows the flow chart of the equalizer in a simple type of 24V battery, comprising the batteries (1 and 2), means (10) for transmitting electric charges, a differential amplifier (11), a fan control and operating system (12), a fan (13).
Figure 3 shows the flow chart of the equalizer in a complex type of 96V battery, comprising the batteries (1 and 8), means (10) for transmitting electric charges, a control system (12), a fan (13).

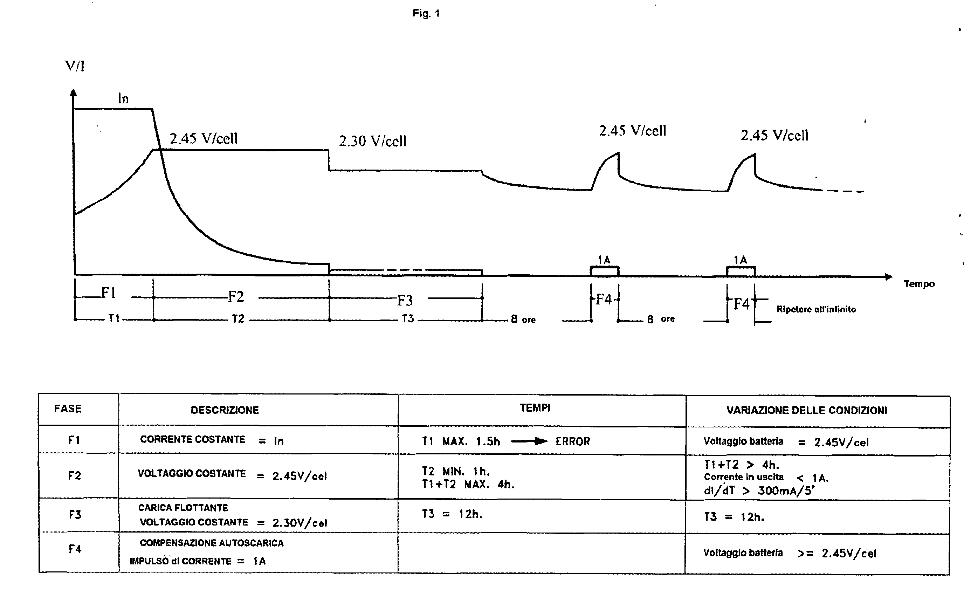

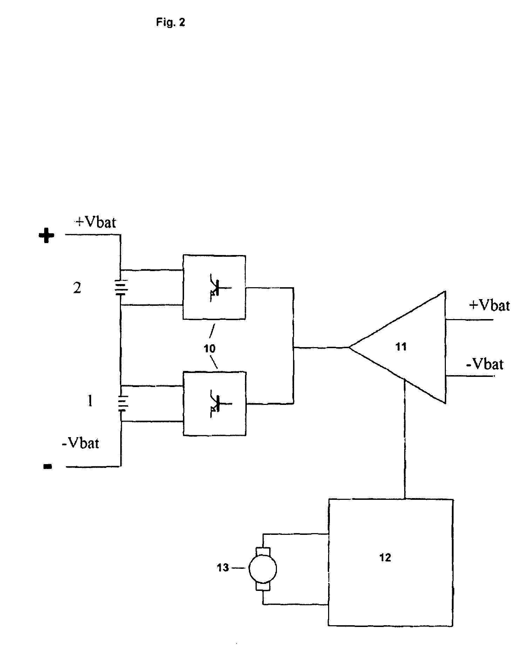

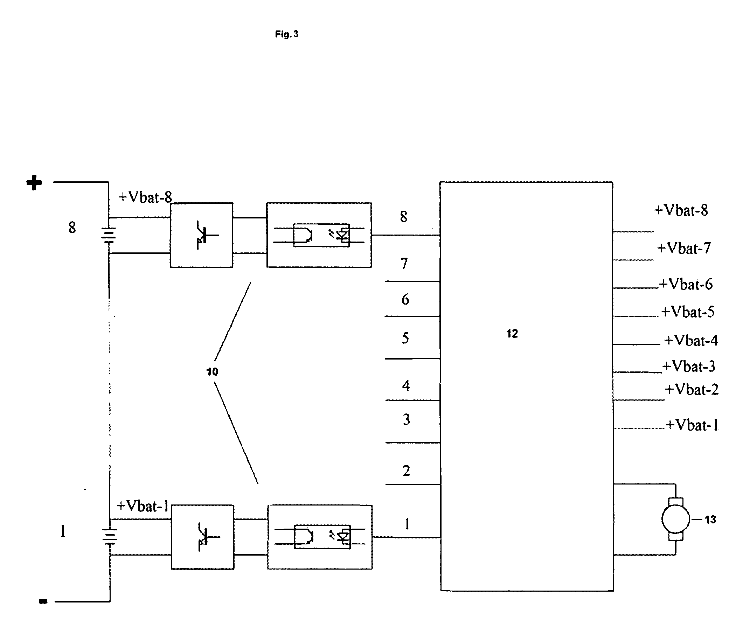

Referring to figure 1, the represented profile is the one guaranteeing a correct battery recharging with minimum thermal increase of elements and minimum unbalance of the single batteries. The dimensioning of battery charger is carried out by the manufacturer, following two simple rules: the nominal voltage has to correspond to the battery one (for example 24V) and the recharging current has to be In > 0,7 C20, i.e. in order to guarantee that recharging is carried out in one hour, the energy supplied by the battery charger has to be at least 70% equal to the battery capacity expressed in C20 (capacity to be discharged in 20 hours). By way of example, the recharging current has to be at least 75 x 0,7 = 52,5 A, for 75Ah in C20 types. Moreover, in order to reduce system costs and to solve the problem concerning the users which do not need an excessive usage of the vehicle during all the day long, battery chargers having the same charging profile but lower nominal voltages can be used. In this case, there can be realized systems called Q60, Q90 and Q120, which allow 90% recharge in 60 minutes, 90 minutes or 120 minutes, respectively. This difference results from the dimensions of the battery charger and therefore by the recharging time. The equalization system is another element of the present invention. It is made up of an electronic circuit aiming at maintaining the battery voltages equal during the recharging steps with constant voltage. Depending on the nominal voltage of the battery pack, the number of batteries to be controlled and therefore also the complexity of the electronic circuit needed vary. In the flow chart of figure 2, it is shown the simplest solution possible with 24V batteries (two batteries to be controlled). In the flow chart of figure 3, there is described the more general solution possible, with up to 96V and higher batteries (eight batteries to be controlled). The functioning principle, which is common to both solutions, is to apply a suitable charge (10) to the batteries (1-8), which tend to increase voltages more than the others one. This voltage charge dampens this voltage increasing tendency and maintains every battery voltage at the same level. Depending on the number of batteries to be controlled and on the number of battery packs connected in parallel, the equalization system can have very different structures both concerning the circuit complexity and the physical dimensions. The physical dimensions are linked to the fact that the balancing effect is obtained by suitably discharging the battery, which needs this to be done. This energy stolen to the battery has to be dissipated in heat and this fact is linked to the physical dimension of the object. The equalization system is the basic element of the system and allows to fully exploit the number of cycles possible for these batteries. If this device is not present, after few charging and discharging cycles, there will be initiated the mechanism which move away the voltages leading to the destruction of the batteries which exceed the maximum voltage of admitted charge. Another element of the system according to the invention is the data monitoring system. It is a microprocessor-based electronic circuit, which records every event during the charging and discharging cycles and detects the problems linked to failures or wrong usage by the users. The principle functions are: detecting a correct product stocking and correct installation, checking the block relay for the discharged battery with acoustic warning (it opens when the battery is discharged and stops the vehicle), acoustic warning in case of exceeding the maximum temperature threshold on the batteries, detecting and solving possible tampering of the monitoring device, detecting the recharges by means of rectifiers different from the original ones, detecting battery voltages out of admitted limits, detecting unbalance of batteries, detecting discharged abandoned batteries, detecting not correctly recharged batteries and charge description (brief, at least one hour, complete, etc...). All these pieces of information are memorized in not volatile form inside the microprocessor and are readable by means of an outer device called MPTOPII, which is not part of the invention. The monitoring system aims at checking every piece of information and proving for certain that possible problems are due to manufacturing faults (guarantee) or to a wrong usage by the user.

## Claims

1. Method for rapid recharging batteries for light traction, which optimizes the duration in time by means of suitable devices for daily recharge and of suitable techniques for preparing the batteries, the method comprising a selection step of the batteries constituting the respective battery pack, a working step of the same battery pack and a recharging step of the same, **characterized in that**:
- the selection of the batteries is carried out by balancing the same with a specific charging cycle and by selecting the ones behaving most similarly;
- the rapid recharging of the batteries is carried out by equalizing the voltage of the same and by monitoring each significant event.

2. Method for rapid recharging batteries for light traction according to claim 1, **characterized in that** the balancing comprises a 24 hour charging cycle with constant voltage.

3. Method for rapid recharging batteries for light traction according to claim 1 or 2, **characterized by** an equalization system which applies a suitable charge to the batteries which tend to increase the voltage more than the others one, thus dampening this voltage increasing tendency and maintaining every battery voltages at the same level.

4. Method for rapid recharging batteries for light traction according to any one of the preceding claims, **characterized by** a monitoring system which records the important events and detects the problems linked to failures or wrong usage.

5. Method for rapid recharging batteries for light traction according to any one of the preceding claims, **characterized by** 90% recovering of depleted energy in one hour recharge.

6. System for rapid recharging comprising a high frequency professional battery charger, batteries able to withstand high charging and discharging currents, equalization device and data monitoring device.

7. System according to claim 6, **characterized by** at least a pure lead, MGA type battery.

8. System according to claim 6 or 7, wherein one or more batteries are connected in series or in parallel.

9. System according to any one of claims 6 to 8, **characterized by** a battery charger able to supply a current, which is at least 70% equal to the battery capacity expressed in C20.
